# FASCICULE DE BREVET EUROPEEN

(11) **EP 3 593 892 B1**
(45) Date de publication et mention de la délivrance du brevet: **28.10.2020**
(21) Numéro de dépôt: 19185605.3
(22) Date de dépôt: 10.07.2019
(51) Int. Cl.: B01D 53/18

(54) **RÉACTEUR POUR L'ÉPURATION D'UN FLUX GAZEUX ET INSTALLATION COMPRENANT UN TEL RÉACTEUR**
REAKTOR ZUM REINIGEN EINES GASFLUSSES UND EINEN SOLCHEN REAKTOR UMFASSENDE ANLAGE
REACTOR FOR PURIFICATION OF A GAS FLOW AND FACILITY INCLUDING SUCH A REACTOR

(30) Priorité: 12.07.2018 FR 1856448
(43) Date de publication de la demande: 15.01.2020
(73) Titulaire: Cockerill Maintenance & Ingenierie SA, 4100 Seraing (BE)
(72) Inventeur: SCHMIDT, Régis, 68740 BALGAU (FR)
(74) Mandataire: Lavaud, Thomas

(56) Documents cités:
- US-A- 3 841 060
- US-A- 3 918 518
- US-A- 5 284 628
- US-A1- 2005 126 106
- US-A1- 2008 257 396

## Description

La présente invention concerne un réacteur destiné à l'épuration d'un flux gazeux par contact avec un liquide. L'invention concerne également une installation comprenant un tel réacteur mais aussi l'utilisation d'une telle installation.

### ARRIERE-PLAN TECHNOLOGIQUE DE L'INVENTION

L'absorption par voie humide est une technique couramment utilisée pour le traitement de polluants contenus dans des émissions gazeuses. Elle s'applique notamment aux émissions liées à la combustion, aux émissions acides et aux odeurs. Ces polluants sont produits par exemple par des entreprises procédant à des traitements de surface, à l'incinération de déchets, à l'épuration d'eaux usées ou encore à l'équarrissage.

Le traitement des émissions gazeuses par la méthode d'absorption par voie humide consiste à neutraliser les contaminants à l'aide d'un liquide d'épuration. Ce liquide d'épuration, dont la nature varie en fonction des contaminants à traiter, est mis en contact avec les émissions gazeuses à l'intérieur d'un réacteur tel qu'un laveur de gaz (« Scrubber »). Les contaminants sont alors captés par le liquide et ainsi extraits du flux gazeux.

Généralement réalisé en matériaux rigides non déformables comme un matériau thermoplastique ou un métal tel que l'acier inoxydable, le réacteur peut poser certains problèmes, notamment dans le cas où le débit de gaz à traiter est important. Le réacteur peut en effet dans ce cas être particulièrement volumineux et mesurer plusieurs dizaines de mètres de haut pour un diamètre de plusieurs mètres, typiquement cinq mètres.

Le réacteur peut ainsi nécessiter des moyens spécifiques de transport, tels qu'un convoi routier exceptionnel, pour le transporter de son lieu de fabrication à celui de son installation, lesquels peuvent être situés dans des pays différents. Le transport du réacteur peut dès lors s'avérer extrêmement coûteux, rendant le réacteur in abordable pour certains exploitants.

De plus, le poids du réacteur peut être très élevé, ce qui peut entraîner des difficultés pour son installation ou son déplacement, notamment en cas de maintenance ou de remplacement.

Par ailleurs, le coût en matière première du réacteur, qu'il soit réalisé en métal ou bien en polymère rigide, peut être très important. Le prix de vente du réacteur, qui dépend en partie du coût en matière première, peut alors s'avérer excessif pour certains exploitants.

Les documents US 3,918,518, US 2008/0257396 A1 et US 2005/0126106 A1 divulguent des constructions de l'art antérieur ayant des parois en matériau souple et, pour les deux premiers documents, formant des structures gonflables.

### OBJET DE L'INVENTION

L'invention a donc pour objet de proposer un réacteur, destiné à l'épuration d'un flux gazeux, qui obvie au moins en partie aux inconvénients précités.

### PRESENTATION DE L'INVENTION

A cet effet, l'invention propose un réacteur destiné à l'épuration d'un flux gazeux par contact avec un liquide. Le réacteur comprend une enceinte délimitant un canal ayant un orifice d'entrée et un orifice de sortie du flux gazeux.

Selon l'invention, l'enceinte a des parois en matériau souple solidaires d'une structure gonflable pourvue de moyens pour y retenir de l'air sous pression de façon à former une structure souple autoportante. Les parois de l'enceinte comprennent au moins deux ouvertures en regard l'une de l'autre recevant chacune de manière étanche une portion d'une barre de renfort traversant l'enceinte de part en part.

Une telle structure à air captif permet de réduire le volume d'encombrement du réacteur lorsque ce dernier n'est pas en fonctionnement et qu'il est en état dégonflé. Son transport s'en trouve ainsi facilité et son poids diminué.

De plus, l'utilisation d'une structure souple permet de diminuer la quantité de matière première nécessaire à la fabrication du réacteur, et donc d'en diminuer son coût de production.

Par ailleurs, la présence de barres de renfort permet notamment d'améliorer la rigidité de l'enceinte et donc sa tenue en fonctionnement.

De manière particulière, la structure gonflable est sensiblement conformée pour un fonctionnement avec le canal en position verticale.

Selon un mode de réalisation préféré de l'invention, l'enceinte comprend une première portion de forme sensiblement cylindrique et une deuxième portion de forme sensiblement tronconique agencée dans le prolongement de la première portion. Lesdites portions sont liées hermétiquement entre elles et les orifices d'entrée et de sortie du flux gazeux sont respectivement ménagés à une extrémité libre des première et deuxième portions.

La conception du réacteur en deux parties permet notamment d'en faciliter la fabrication mais aussi le transport. Elle permet également de faciliter l'installation d'équipements à l'intérieur du réacteur, tels qu'une rampe d'arrosage/pulvérisation ou un dévésiculeur.

Selon une caractéristique particulière, la structure gonflable a une première partie en regard de la première portion de l'enceinte qui comprend des chambres communiquant entre elles et s'étendant sur sensiblement toute la longueur de ladite portion.

Un tel agencement de la première partie de la structure gonflable permet notamment un bon maintien en volume de la première portion dudit réacteur.

Selon une autre caractéristique particulière, la structure gonflable a une deuxième partie en regard de la deuxième portion de l'enceinte qui comprend une chambre formant des anneaux superposés les uns aux autres.

Un tel agencement de la deuxième partie de la structure gonflable permet notamment un bon maintien en volume de la deuxième portion dudit réacteur.

De manière particulière, la première partie et la deuxième partie de la structure sont liées entre elles par des câbles en acier inoxydables.

Selon une caractéristique particulière, la structure comprend des armatures rigides telles que des anneaux métalliques pour rigidifier l'enceinte.

La présence d'armatures rigides permet aussi de faciliter le pliage de la structure gonflable, notamment pour son stockage et son transport.

De manière particulière, les parois de l'enceinte comprennent au moins une ouverture recevant de manière étanche un obturateur.

La présence d'une telle ouverture permet de pouvoir accéder à l'intérieur de l'enceinte et plus particulièrement de former des regards pour la maintenance.

De manière particulière, au moins une rampe d'arrosage permettant d'injecter le liquide à l'intérieur de l'enceinte sous forme d'un brouillard de fines gouttelettes.

Selon une caractéristique particulière, la rampe d'arrosage est raccordée à un conduit d'arrivée du liquide et comprend des trous permettant au liquide de s'échapper en gouttelettes qui sont alors pulvérisées par le flux gazeux circulant à l'intérieur du canal.

De manière particulière, un dévésiculeur permettant de coalescer ledit liquide est agencé sensiblement au niveau de la jonction entre la première portion et la deuxième portion de l'enceinte.

De manière particulière, les parois de l'enceinte sont réalisées dans un matériau souple constitué d'un polymère thermoplastique, ici du polychlorure de vinyle (PVC). D'autres matériaux sont envisageables comme le polyéthylène haute-densité (HDPE) ou le polypropylène (PP) .

L'invention concerne également une installation de traitement d'un flux gazeux par un liquide, comprenant au moins un réacteur selon l'une quelconque des revendications précédentes, dans lequel le flux gazeux est un gaz chargé en composés odorants et/ou toxiques qui sont piégés dans le liquide amené simultanément dans le réacteur.

L'invention concerne également une utilisation d'une telle installation pour l'épuration, avant son rejet dans l'atmosphère environnant, d'un flux gazeux issu d'un dispositif générant un gaz chargé en composés odorants et/ou toxiques indésirables.

Selon une caractéristique particulière, le dispositif générant un gaz chargé en composés odorants et/ou toxiques est une unité de compostage de déchets organiques, une entreprise procédant à des traitements de surface, une station d'épuration d'eaux usées, une usine agroalimentaire ou une usine d'équarrissage.

Il faut comprendre par là qu'une telle installation peut être utilisée dans des domaines d'activité très variés comme l'agroalimentaire, la métallurgique, l'automobile, l'aéronautique, le nucléaire... Elle vise de manière générale à être utilisée pour tout traitement de lavage de gaz.

### DESCRIPTION DES FIGURES

L'invention sera mieux comprise à la lumière de la description qui suit, laquelle est purement illustrative et non limitative, et doit être lue en regard des figures annexées parmi lesquelles :
- la figure 1 représente schématiquement un réacteur selon un mode de réalisation particulier de l'invention,
- la figure 2 est une vue en coupe longitudinale du réacteur illustré à la figure 1,
- la figure 3 est une vue en coupe partielle d'un obturateur agencé sur une ouverture du réacteur illustré à la figure 1,
- la figure 4 est une vue en coupe partielle d'une barre de renfort traversant le réacteur illustré à la figure 1.

### DESCRIPTION DETAILLEE D'UN MODE DE REALISATION PARTICULIER DE L'INVENTION

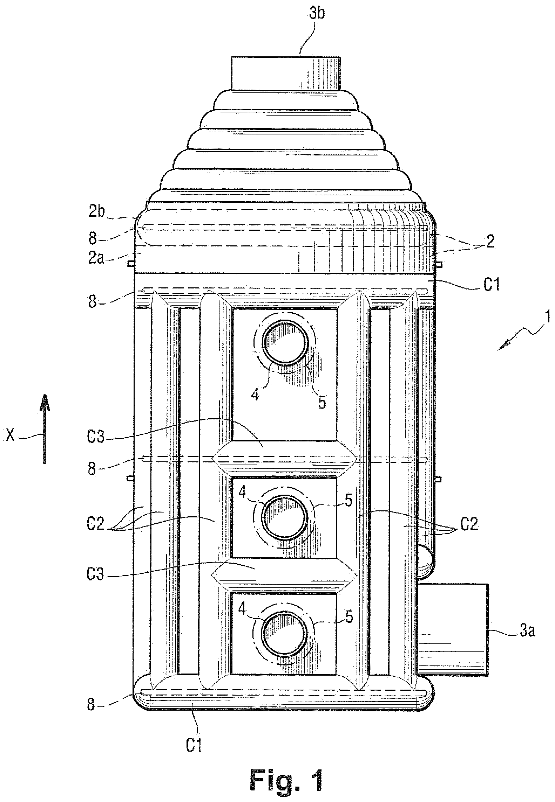

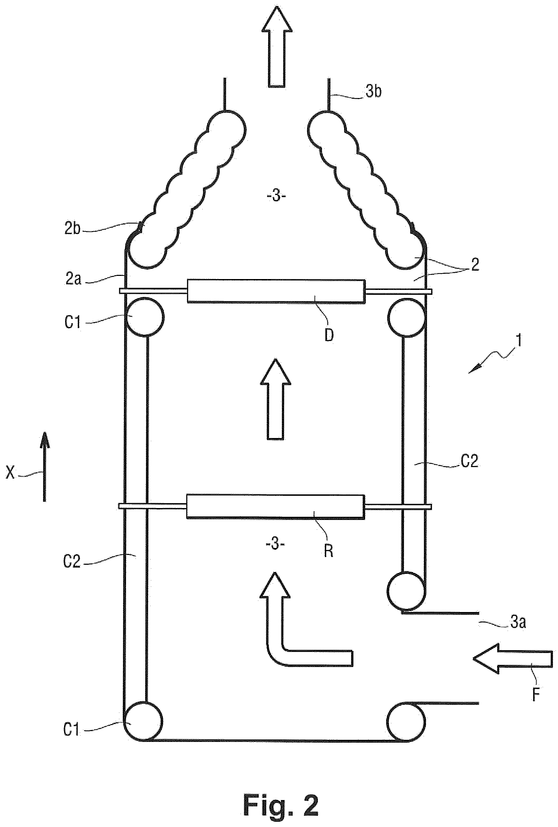

En référence aux figures 1 et 2, un réacteur 1, destiné à l'épuration d'un flux gazeux F, comprend une enceinte 2 délimitant un canal 3 ayant un orifice d'entrée 3a et un orifice de sortie 3b du flux gazeux.

L'enceinte 2, de forme sensiblement tubulaire d'axe X (ici vertical), comporte successivement le long de l'axe X une première portion 2a et une deuxième portion 2b. La première portion 2a a une forme sensiblement cylindrique à section circulaire et a des parois en matériau souple constitué ici d'une feuille de polychlorure de vinyle (PVC). L'orifice d'entrée 3a du flux gazeux est ménagé horizontalement en partie basse de la première portion 2a.

Les parois de la première portion 2a sont solidaires d'une première partie d'une structure gonflable qui comprend deux chambres C1 annulaires, s'étendant chacune horizontalement a une extrémité de la première portion 2a, et des chambres C2 cylindriques s'étendant verticalement sur toute la hauteur de la première portion 2a pour lier les deux chambres C1 annulaires entre elles.

De l'air sous pression est injecté via un orifice de remplissage dans les chambres C1, C2, cet orifice étant pourvu d'un clapet permettant de retenir l'air une fois le remplissage terminé.

Les parois de la première portion 2a comprennent trois ouvertures 4 circulaires de taille identique donnant sur le canal 3. Les trois ouvertures 4 sont alignées et sont reparties sur la hauteur de ladite portion 2a (visibles sur la figure 1). La série d'ouvertures 4 est réalisée entre deux chambres C2 reliées entre elles par des chambres transversales C3 permettant de rigidifier l'enceinte et limiter le risque d'un déchirement de l'enceinte du fait du poids des éléments fixés aux bords des ouvertures 4. Les parois de la première portion 2a comprennent également trois autres ouvertures (non visibles sur la figure 1) en regards des ouvertures 4.

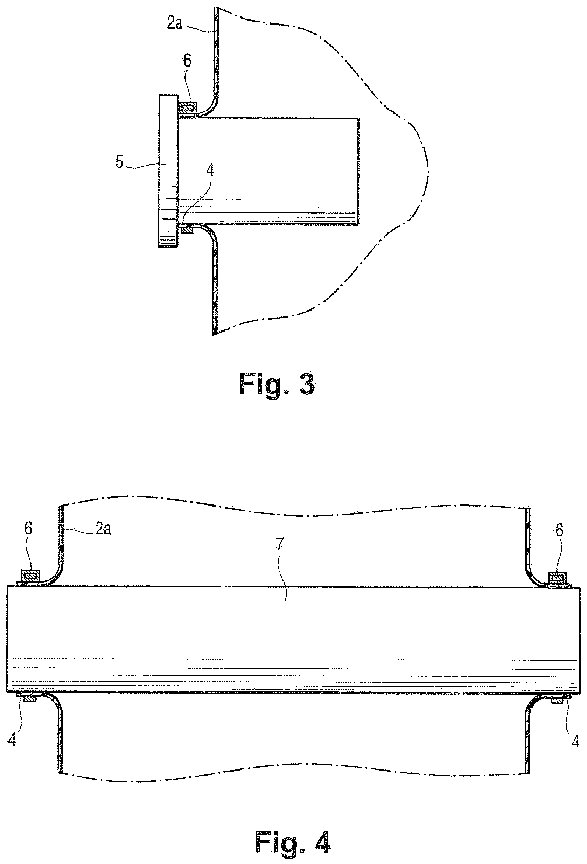

Comme illustré à la figure 3, chacune de ces six ouvertures reçoivent ici de manière étanche un obturateur 5 de façon à empêcher le flux gazeux F de s'échapper par lesdites ouvertures. Le maintien des obturateurs 5 dans les ouvertures 4 peut par exemple être réalisé par des colliers de serrage 6 de type SERFLEX ou par vissage.

Comme illustré à la figure 4, chacune des ouvertures 4 peut aussi recevoir de manière étanche une portion d'une barre de renfort 7 traversant de part en part la première portion 2a. Le maintien des barres de renfort 7 dans les ouvertures 4 peut par exemple être réalisé par des colliers de serrage 6 de type SERFLEX. La présence des barres de renfort 7 permet en particulier de d'améliorer la rigidité et la stabilité structurelle de l'enceinte et donc sa tenue en fonctionnement, mais aussi d'optimiser la répartition des efforts et de limiter les décollements et déformations potentielles.

L'enceinte comprend également une deuxième portion 2b de forme sensiblement tronconique s'étendant selon l'axe X et ayant une base (section de plus grand diamètre) orientée vers le bas. La deuxième portion 2b est agencée dans le prolongement de la première portion 2a, la base de la deuxième portion 2a venant ainsi reposer sur l'extrémité supérieure de la première portion 2a. Le diamètre de la base de la deuxième portion 2b tronconique est ici sensiblement égal au diamètre de la première portion 2a cylindrique.

De manière identique à la première portion 2a, la deuxième portion 2b a des parois en matériau souple constitué ici d'une feuille de polychlorure de vinyle (PVC).

L'orifice de sortie 3b du flux gazeux est ménagé en partie haute de la deuxième portion 2b selon l'axe X et a un diamètre sensiblement égal au diamètre de l'extrémité supérieure (section de plus petit diamètre) de la deuxième portion 2b tronconique.

Les parois de la deuxième portion 2b sont solidaires d'une deuxième partie de structure gonflable qui comprend une chambre s'étendant sur sensiblement toute la hauteur de la deuxième portion 2b tronconique en formant des anneaux superposés horizontalement les uns aux autres.

Comme pour la première portion 2a, de l'air sous pression est injecté via un orifice de remplissage dans la chambre, cet orifice étant pourvu d'un clapet permettant de retenir l'air une fois le remplissage terminé.

L'extrémité supérieure de la première portion 2a recouvre en totalité l'anneau inférieur de la deuxième portion 2b et partiellement une partie de l'anneau accolé audit anneau inférieur. L'extrémité supérieure de la première portion 2a et l'anneau inférieur de la deuxième portion 2b sont pourvus de pattes ou de crochets permettant le passage d'un câble de fixation qu'il est possible de tendre pour plaquer la première portion 2a et la deuxième portion 2a l'une contre l'autre. Le câble est ici en acier inoxydable et est agencé entre ces deux anneaux pour plaquer les première et deuxième parties de la structure gonflable de l'enceinte 2 l'une contre l'autre. Le câble n'est pas représenté sur les figures pour des raisons de clarté.

Les première et deuxième partie de la structure gonflable de l'enceinte 2 forment ainsi une structure souple autoportante qui est ici conformée pour un fonctionnement avec le canal 3 en position verticale.

Pour des raisons de rigidité du réacteur, la structure gonflable de l'enceinte 2 comprend ici des anneaux métalliques 8 répartis sur la hauteur de l'enceinte 2 de façon à garantir des zones non déformables.

Ainsi, la structure de la première portion 2a de l'enceinte 2 comprend deux anneaux métalliques 8 agencés à chacune des deux extrémités de la dite portion 2a, soit aux niveaux des chambres C1, et un troisième anneau métallique 8 agencé sensiblement au centre de ladite portion 2a.

La structure de la deuxième portion 2b de l'enceinte comprend un anneau métallique 8 en partie basse à la base de ladite portion 2b.

Le réacteur 1 comprend une rampe d'arrosage R agencée à l'intérieur de la première portion 2a de l'enceinte au-dessus de l'orifice d'entrée 3a du flux gazeux F, sensiblement au centre de la première portion 2a. La rampe d'arrosage R est fixée sur des tubes rigides qui traversent intégralement la structure gonflable de la première portion 2a et reprennent la charge au niveau de l'épaisseur de ladite structure gonflable. La rampe d'arrosage R comprend des trous permettant au liquide, appelé aussi liquide de lavage, de s'échapper en gouttelettes qui sont alors pulvérisées par le flux gazeux circulant à l'intérieur du canal 3. Le gaz à purifier entre alors en contact avec le liquide dispersé dans l'enceinte 2 sous forme de brouillard.

Après contact avec le liquide et la réaction chimique avec ce dernier, le gaz épuré s'échappe ensuite par l'orifice de sortie 3b. Toutefois, le liquide est retenu à l'intérieur de l'enceinte 2 au moyen d'un dévésiculeur D agencé sensiblement au niveau de la jonction entre la première portion 2a et la deuxième portion 2b de l'enceinte 2. Le dévésiculeur D est fixé sur des tubes rigides qui traversent intégralement la structure gonflable de la première portion 2a et reprennent la charge au niveau de l'épaisseur de ladite structure gonflable. Le dévésiculeur D permet ainsi de coalescer et de collecter ledit liquide de lavage.

A titre d'exemple de réalisation, le réacteur présente un diamètre de sensiblement 5 mètres et une hauteur de sensiblement 10 mètres.

Bien entendu, l'invention n'est pas limitée au mode de réalisation décrit mais englobe toute variante entrant dans le champ de l'invention telle que définie par les revendications.

Bien qu'ici la structure gonflable soit conformée pour un fonctionnement avec le canal 3 en position verticale, un fonctionnement en position horizontale est bien entendu envisageable.

Toute autre forme de structure gonflable est bien entendu envisageable pour peu qu'elle forme une structure souple autoportante.

Bien qu'ici un seul orifice de remplissage soit prévu pour remplir d'air sous pression la structure gonflable de la première portion 2a, il est aussi possible de prévoir plusieurs orifices de remplissage, notamment dans le cas où toutes les chambres ne communiquent pas entre elles.

Bien qu'ici la deuxième portion 2b de l'enceinte ne comprenne qu'une seule chambre, elle pourra aussi en comprendre plusieurs, ce qui nécessitera alors plusieurs orifices de remplissage.

## Revendications

1. Réacteur (1) destiné à l'épuration d'un flux gazeux (F) par contact avec un liquide, comprenant une enceinte (2) délimitant un canal (3) ayant un orifice d'entrée (3a) et un orifice de sortie (3b) du flux gazeux, l'enceinte (2) ayant des parois en matériau souple solidaires d'une structure gonflable pourvue de moyens pour y retenir de l'air sous pression de façon à former une structure souple autoportante, et les parois de l'enceinte comprenant au moins deux ouvertures (4) en regard l'une de l'autre recevant chacune de manière étanche une portion d'une barre de renfort (7) traversant l'enceinte de part en part.

2. Réacteur selon la revendication 1, dans lequel la structure gonflable est sensiblement conformée pour un fonctionnement avec le canal en position verticale.

3. Réacteur selon l'une quelconque des revendications précédentes, dans lequel l'enceinte comprend une première portion (2a) de forme sensiblement cylindrique et une deuxième portion de forme sensiblement tronconique (2b) agencée dans le prolongement de la première portion (2a), lesdites portions étant liées hermétiquement entre elles, et les orifices d'entrée (3a) et de sortie (3b) du flux gazeux étant respectivement ménagés à une extrémité libre des première et deuxième portions.

4. Réacteur selon la revendication 3, dans lequel la structure gonflable a une première partie, en regard de la première portion de l'enceinte, qui comprend des chambres (C2) communiquant entre elles et s'étendant sur sensiblement toute la longueur de ladite portion.

5. Réacteur selon la revendication 3, dans lequel la structure gonflable a une deuxième partie, en regard de la deuxième portion de l'enceinte, qui comprend une chambre formant des anneaux superposés les uns aux autres.

6. Réacteur selon la revendication 3, dans lequel la première partie et la deuxième partie de la structure sont liées entre elles par des câbles en acier inoxydables.

7. Réacteur selon l'une quelconque des revendications 3 à 6, dans lequel un dévésiculeur (D) permettant de coalescer le liquide est agencé sensiblement au niveau de la jonction entre la première portion (2a) et la deuxième portion (2b) de l'enceinte.

8. Réacteur selon l'une quelconque des revendications précédentes, dans lequel la structure comprend des armatures rigides telles que des anneaux métalliques (8) pour rigidifier l'enceinte.

9. Réacteur selon l'une quelconque des revendications précédentes, dans lequel au moins l'une des parois de l'enceinte comprend au moins une ouverture (4) recevant de manière étanche un obturateur (5).

10. Réacteur selon l'une quelconque des revendications précédentes, comprenant au moins une rampe d'arrosage (R) permettant d'injecter le liquide à l'intérieur de l'enceinte sous forme d'un brouillard de fines gouttelettes.

11. Réacteur selon la revendication 10, dans lequel la rampe d'arrosage (R) est raccordée à un conduit d'arrivée du liquide et comprend des trous permettant au liquide de s'échapper en gouttelettes qui sont alors pulvérisées par le flux gazeux (F) circulant à l'intérieur du canal.

12. Réacteur selon l'une quelconque des revendications précédentes, dans lequel les parois de l'enceinte sont réalisées dans un matériau constitué d'un polymère thermoplastique tel que le polychlorure de vinyle (PVC), le polyéthylène haute-densité (HDPE) ou le polypropylène (PP).

13. Installation de traitement d'un flux gazeux (F) par un liquide, comprenant au moins un réacteur (1) selon l'une quelconque des revendications précédentes, dans lequel le flux gazeux (F) est un gaz chargé en composés odorants et/ou toxiques qui sont piégés dans le liquide amené dans le réacteur.

14. Utilisation de l'installation selon la revendication 13, pour l'épuration, avant son rejet dans l'atmosphère environnant, d'un flux gazeux (F) issu d'un dispositif générant un gaz chargé en composés odorants et/ou toxiques indésirables.

15. Utilisation de l'installation selon la revendication 14, dans laquelle le dispositif générant un gaz chargé en composés odorants et/ou toxiques est une unité de compostage de déchets organiques, une entreprise procédant à des traitements de surface, une station d'épuration d'eaux usées, une usine agroalimentaire ou une usine d'équarrissage.

## Patentansprüche

1. Reaktor (1), der zur Reinigung eines Gasflusses (F) durch Kontakt mit einer Flüssigkeit bestimmt ist, umfassend eine Einfassung (2), die einen Kanal (3) begrenzt, der eine Einlassöffnung (3a) und eine Auslassöffnung (3b) für den Gasfluss hat, wobei die Einfassung (2) Wände aus einem flexiblem Material hat, die fest mit einer aufblasbaren Struktur verbunden sind, welche mit Mitteln versehen ist, um darin Druckluft derart zurückzuhalten, dass eine selbsttragende flexible Struktur gebildet wird, und wobei die Wände der Einfassung mindestens zwei einander gegenüberliegende Öffnungen (4) umfassen, die jeweils auf dichte Weise einen Abschnitt einer Verstärkungsstange (7) aufnehmen, die die Einfassung von einer Seite zur anderen durchsetzt.

2. Reaktor nach Anspruch 1, bei dem die aufblasbare Struktur im Wesentlichen an einen Betrieb mit vertikaler Lage des Kanals angepasst ist.

3. Reaktor nach einem der vorhergehenden Ansprüche, bei dem die Einfassung einen ersten Abschnitt (2a) mit im Wesentlichen zylindrischer Form und einen zweiten Abschnitt (2b) mit im Wesentlichen kegelstumpfförmiger Form umfasst, der in der Verlängerung des ersten Abschnittes (2a) angeordnet ist, wobei die genannten Abschnitte hermetisch miteinander verbunden sind, und wobei die Einlassöffnung (3a) und die Auslassöffnung (3b) für den Gasfluss an einem freien Ende des ersten bzw. zweiten Abschnittes ausgebildet sind.

4. Reaktor nach Anspruch 3, bei dem die aufblasbare Struktur einen ersten Teil hat, gegenüber dem ersten Abschnitt der Einfassung, der Kammern (C2) umfasst, die miteinander in Verbindung stehen und sich im Wesentlichen über die gesamte Länge des genannten Abschnittes erstrecken.

5. Reaktor nach Anspruch 3, bei dem die aufblasbare Struktur einen zweiten Teil hat, gegenüber dem zweiten Abschnitt der Einfassung, der eine Kammer umfasst, die übereinander angeordnete Ringe bildet.

6. Reaktor nach Anspruch 3, bei dem der erste Teil und der zweite Teil der Struktur miteinander über rostfreie Stahlkabel verbunden sind.

7. Reaktor nach einem der Ansprüche 3 bis 6, bei dem ein Tropfenabscheider (D), der ein Koaleszieren der Flüssigkeit ermöglicht, im Wesentlichen im Bereich der Verbindung zwischen dem ersten Abschnitt (2a) und dem zweiten Abschnitt (2b) der Einfassung angeordnet ist.

8. Reaktor nach einem der vorhergehenden Ansprüche, bei dem die Struktur starre Bewehrungen wie z. B. metallene Ringe (8) zur Versteifung der Einfassung umfasst.

9. Reaktor nach einem der vorhergehenden Ansprüche, bei dem mindestens eine der Wände der Einfassung mindestens eine Öffnung (4) umfasst, die auf dichte Weise eine Verschlussvorrichtung (5) aufnimmt.

10. Reaktor nach einem der vorhergehenden Ansprüche, umfassend mindestens einen Rohrregner (R), der ein Einspritzen der Flüssigkeit ins Innere der Einfassung in Form eines Nebels aus feinen Tröpfchen ermöglicht.

11. Reaktor nach Anspruch 10, bei dem der Rohrregner (R) an eine Zuführleitung zum Zuführen von Flüssigkeit angeschlossen ist und Löcher umfasst, durch die die Flüssigkeit als Tröpfchen entweichen kann, die dann durch den im Inneren des Kanals zirkulierenden Gasfluss (F) pulverisiert werden.

12. Reaktor nach einem der vorhergehenden Ansprüche, bei dem die Wände der Einfassung aus einem Material hergestellt sind, das aus einem thermoplastischen Polymer wie z. B. Polyvinylchlorid (PVC), Polyethylen hoher Dichte (HDPE) oder Polypropylen (PP) gebildet ist.

13. Anlage zur Behandlung eines Gasflusses (F) durch eine Flüssigkeit, umfassend mindestens einen Reaktor (1) nach einem der vorhergehenden Ansprüche, bei dem der Gasfluss (F) ein Gas ist, das mit riechenden und/oder toxischen Verbindungen beladen ist, die in der in den Reaktor eingebrachten Flüssigkeit abgeschieden werden.

14. Nutzung der Anlage nach Anspruch 13, zur Reinigung eines Gasflusses (F) vor seinem Ausstoß in die umgebende Atmosphäre, wobei der Gasfluss (F) von einer Vorrichtung stammt, die ein Gas erzeugt, das mit unerwünschten riechenden und/oder toxischen Verbindungen beladen ist.

15. Nutzung der Anlage nach Anspruch 14, bei der die Vorrichtung, die ein mit riechenden und/oder toxischen Verbindungen beladenes Gas erzeugt, eine Anlage zur Kompostierung organischer Abfälle, ein Werk, das Oberflächenbehandlungen durchführt, eine Kläranlage für Abwässer, eine Lebensmittelfabrik oder eine Tierkörperverwertungsfabrik ist.

## Claims

1. A reactor (1) for purifying a gas stream (F) by contact with a liquid, the reactor comprising an enclosure (2) defining a channel (3) having an inlet orifice (3a) and an outlet orifice (3b) for the gas stream, the enclosure (2) having flexible material walls secured to an inflatable structure provided with means for retaining air under pressure therein so as to form a self-supporting flexible structure, and the walls of the enclosure including at least two openings (4) facing each other and each receiving in sealed manner a portion of a reinforcing bar (7) that passes through the enclosure.

2. A reactor according to claim 1, wherein the inflatable structure is shaped substantially to operate with the channel in the vertical position.

3. A reactor according to either preceding claim, wherein the enclosure comprises a first portion (2a) of substantially cylindrical shape and a second portion (2b) of substantially frustoconical shape arranged in line with the first portion (2a), said portions being connected together hermetically, and the inlet and outlet orifices (3a and 3b) for the gas stream being arranged at respective free ends of the first and second portions.

4. A reactor according to claim 3, wherein the inflatable structure has a first part facing the first portion of the enclosure, which first part includes chambers (C2) communicating with one another and extending over substantially the entire length of said portion.

5. A reactor according to claim 3, wherein the inflatable structure has a second part facing the second portion of the enclosure, which second part includes a chamber forming rings that are superposed on one another.

6. A reactor according to claim 3, wherein the first and second parts of the structure are connected together by stainless steel cables.

7. A reactor according to any one of claims 3 to 6, wherein a droplet catcher (D) for coalescing the liquid is arranged substantially at the junction between the first and second portions (2a and 2b) of the enclosure.

8. A reactor according to any preceding claim, wherein the structure includes rigid reinforcement such as metal rings (8) for stiffening the enclosure.

9. A reactor according to any preceding claim, wherein at least one of the walls of the enclosure includes at least one opening (4) that receives a shutter (5) in sealed manner.

10. A reactor according to any preceding claim, including at least one sprinkler boom (R) enabling the liquid to be injected into the inside of the enclosure in the form of a mist of fine droplets.

11. A reactor according to claim 10, wherein the sprinkler boom (R) is connected to an admission duct for the liquid and includes holes enabling the liquid to escape in droplets that are then sprayed by the gas stream (F) flowing inside the channel.

12. A reactor according to any preceding claim, wherein the walls of the enclosure are made of a material constituted by a thermoplastic polymer such as polyvinyl chloride (PVC), high-density polyethylene (HDPE), or polypropylene (PP).

13. An installation for treating a gas stream (F) with a liquid, the installation including at least one reactor (1) according to any preceding claim, wherein the gas stream (F) is a gas carrying odorous and/or toxic compounds that are trapped in the liquid fed into the reactor.

14. The use of the installation according to claim 13, for purifying a gas stream (F) before it is discharged into the surrounding atmosphere, the gas stream (F) coming from a device that generates gas carrying undesirable odorous and/or toxic compounds.

15. The use of the installation according to claim 14, wherein the device that generates gas carrying odorous and/or toxic compounds is a unit for composting organic waste, a business performing surface treatments, a wastewater treatment station, a food processing factory, or a knackers yard.
